Europäisches Patentamt

European Patent Office

Office européen des brevets

(11) Veröffentlichungsnummer: 0 114 671
A2

(12) # EUROPÄISCHE PATENTANMELDUNG

(21) Anmeldenummer: 84100549.9

(22) Anmeldetag: 19.01.84

(51) Int. Cl.³: B 65 G 1/127

(30) Priorität: 21.01.83 DE 3302018
11.01.84 DE 3400743

(43) Veröffentlichungstag der Anmeldung:
01.08.84 Patentblatt 84/31

(84) Benannte Vertragsstaaten:
CH DE FR GB IT LI NL SE

(71) Anmelder: ELECTROLUX CONSTRUCTOR GMBH
Werkstrasse 32
D-5901 Wilnsdorf 3(DE)

(72) Erfinder: Pepping, Karl-Heinz, Dipl.-Ing.
Burgring 12a
D-5353 Mechernich Weyer(DE)

(72) Erfinder: Kreuz, Werner, Ing. grad.
Frankfurter Strasse 29
D-5901 Wilnsdorf(DE)

(74) Vertreter: Patentanwälte Beetz sen. - Beetz jun. Timpe -
Siegfried - Schmitt-Fumian
Steinsdorfstrasse 10
D-8000 München 22(DE)

(54) Mechanischer Schrank mit einem paternosterartigen Umlaufförderer.

(57) Gegenstand der Erfindung ist ein mechanischer Schrank mit einem paternosterartigen Umlaufförderer, bestehend aus zwei Endlosketten (1, 2), einer Vielzahl von Tablaren (17) zur Aufnahme von z. B. Industrie-Artikeln, die mit ihren Stirnwänden über Tragarmpaare (7, 8) in vorgegebenen gleichen Abständen an den beiden Endlosketten (1, 2) angehängt sind, und aus ortsfesten Führungsschienen (18, 19) an den Schrankschmalseiten, die aus jeweils zwei vertikalen Abschnitten (20) und je einem oberen und unteren Bogenabschnitt (21, 22) bestehen und in denen an den Stirnwänden der Tablare (17) starr befestigte Führungsglieder (10) geführt sind. Bei derartigen mechanischen Schränken ergeben sich Probleme hinsichtlich einer sicheren und stoßfreien Führung der Endlosketten und der Tablare, insbesondere bei deren ungleichmäßiger Füllung. Zum Erhalt einer verwindungssteifen Konstruktion und einer verbesserten Führung sind an jedem Führungsglied (10) zwei Führungselemente (11, 12) mit vertikalem Zwischenabstand gelagert, wobei in den vertikalen Abschnitten (20) der Führungsschienen (18, 19) beide Führungselemente (11, 12) gemeinsam und in den Bogenabschnitten (21, 22) nur jeweils ein Führungselement (12) geführt sind. Die Größe und Anordnung der Bauteile ist so aufeinander abgestimmt, daß die Tablare (17) sich während ihrer vertikalen Bewegungen aufeinander abstützen.

./...

FIG.1

Mechanischer Schrank mit einem paternosterartigen Umlaufförderer

Die Erfindung betrifft einen Schrank mit einem paternosterartigen Umlaufförderer, bestehend aus zwei Endlosketten, einer Vielzahl von Tablaren zur Aufnahme von z. B. Industrie-Artikeln, die mit ihren Stirnwänden über Tragarmpaare in vorgegebenen gleichen Abständen an den beiden Endlosketten angehängt sind, und aus ortsfesten Führungsschienen an den Schrankschmalseiten, die aus jeweils zwei vertikalen Abschnitten und je einem oberen und unteren Bogenabschnitt bestehen und in denen an den Stirnwänden der Tablare starr befestigte Führungsglieder geführt sind.

Im Zuge der Rationalisierung der Lagerhaltung werden seit einigen Jahren sog. mechanische Schränke in sich verstärkendem Maße eingesetzt, die in ihrem Inneren eine vertikale paternosterartige Fördereinrichtung besitzen, an welcher die Schubladen in Form von sog. Tablaren angehängt sind. Mittels einer manuellen oder

199-(x2257)-Sd-E

programmierten Steuerung können einzelne Tablare durch entsprechende Betätigung der Fördereinrichtung bis vor eine in etwa Tischhöhe befindliche Öffnung verfahren werden. Die Entnahme und das Einlegen von Artikeln bzw. Gegenständen aus bzw. in die Tablare kann von einer Bedienungsperson manuell oder auch durch Manipulatoren automatisch erfolgen. Gegenüber einer herkömmlichen Regal-Lagerung erfordern derartige mechanische Schränke zwar einen erheblich höheren Investitionsaufwand, dem jedoch eine Reihe von Vorzügen gegenüberstehen. Ein wesentlicher Vorteil liegt in der schnellen und einfachen Zugriffsmöglichkeit zu den unterschiedlichen Lagerartikeln in gleichbleibender Höhe der Schranköffnung. Ferner kann je nach der Höhe der Schränke eine große Anzahl unterschiedlichster Artikel auf einer vergleichsweise geringen Raumfläche gelagert werden, weil der bei herkömmlicher Regallagerung für die Hebezeuge benötigte An- und Abfahrraum wegfällt. Ferner lassen sich derartige mechanische Schränke incl. ihrer Programm-Steuerung als Zwischenspeicher und Verteilstationen in Montage- und Fertigungsstraßen integrieren.

Aus der DE-PS 1 285 952 ist ein mechanischer Schrank bekannt, bei dem die Tablare an zwei einander gegenüberliegenden vertikalen Endlosketten aufgehängt sind. An den über Kettenräder geführten Endlosketten sind radial zur Umlaufrichtung nach außen abstehende Tragarme angelenkt, an deren freien Enden die Tablare gehalten sind. Die beiden Endlosketten sind ferner gegeneinander seitlich versetzt und die Tablare weisen an ihren beiden schmalen Stirnwänden Tragzapfen auf, die an den diagonal gegenüberliegenden Ecken oberhalb ihres Schwerpunktes angeordnet sind und an den Tragarmen der entsprechend zueinander versetzten Kettenstränge angreifen. Durch diese Ausgestaltung wird erreicht, daß die Tablare bei Vermeidung einer Berührung in der oberen bzw. unteren Kreisbahn auf den geraden vertikalen Strecken dicht aufeinanderfolgend angeordnet werden können, ohne daß zusätzlich Führungen notwendig wären. Die Tragarme haben die Form von dreieckigen Platten, wobei in den beiden Eckteilen der Basis jeweils ein Kettenbolzen und im Bereich der Dreieckspitze der Tragzapfen des Tablars angeordnet sind.

In der Praxis hat es sich jedoch gezeigt, daß insbesondere bei ungleichmäßiger Beladung der Tablare erhebliche Kräfte über die Tragarme auf die - ungeführte - Kette ausgeübt werden, was zu unerwünschten Auslenkungen der jeweiligen Kettenstränge sowie hohen und ungleichmäßigen Beanspruchungen einzelner Kettenglieder führt. Besonders große Momente treten im kreisbogenförmigen Bereich der Kettenräder auf, die auf Fliehkräfte zurückzuführen sind und die gesamte Schrankkonstruktion in Schwingungen versetzen können. Darüber hinaus müssen die Tablare ein bestimmtes Breiten/Längenverhältnis haben, damit die durch die in diagonale Versetzung der Tragzapfen erreichte Stabilisierwirkung auch praktisch zum Tragen kommt. Damit ist jedoch die maximal mögliche Breite der mechanischen Schränke begrenzt.

Aus der DE-PS 20 34 222 ist eine Umlauf-Fördervorrichtung für mechanische Schränke ohne Begrenzung ihrer Breite bekannt, bei der die Tablare ebenfalls über stirnseitige Tragzapfen und winkelförmig gespreizte Tragarmpaare an Endlosketten aufgehängt sind. Zum Erhalt der gewünschten großen Schrankbreite sind jeweils zwei zueinander horizontal fluchtende kurze Tablare vorgesehen, deren äußere Tragzapfen auf einer gleichen Achse liegen und deren an den zueinander weisenden Stirnwänden angeordnete Tragzapfen vertikal zu den beiden äußeren versetzt angeordnet und über ein jeweils zusätzliches Tragarmpaar an einer dritten mittleren Endloskette angelenkt sind. Eine Führung der Tragarme bzw. der Tragzapfen wird auch bei diesem Umlaufförderer nicht für notwendig erachtet, was jedoch ebenfalls zu Schwing- oder Kippbewegungen der Tablare und zu hohen ungleichmäßigen Beanspruchungen der Kettenräder führt, wenn die Tablare durch ungleichmäßige Füllung unterschiedliche Gewichte haben und/oder sich ihr Schwerpunkt durch außermittige Füllung verlagert.

Aus dem DE-GBM 18 86 533 ist ein paternosterartiger Umlaufförderer für mechanische Schränke bekannt, bei dem die zur gelenkigen Halterung der Tablare an den beiden Endlosketten vorgesehenen Tragarme als Spreizhebel-Paare ausgebildet sind, deren äußere abstehende Enden über den jeweiligen Tragzapfen der Tablare gelenkig miteinander verbunden sind. Zur Verringerung der im Umlenkbereich durch die auf die Tablare einwirkenden Fliehkräfte auftretenden Momente und damit zur Erzielung einer größeren Stabilität soll die Länge der Einzelhebel gleich dem Durchmesser und die Spreizung eines Hebelpaares gleich dem halben Durchmesser der Umlenkrollen gewählt werden. Diese durch eine parabelförmige Bewegungsbahn im Überschiebebereich erreichte Verringerung der auftretenden Momente reicht jedoch nicht aus, um die Fördergeschwindigkeit in einer angestrebten Weise zu erhöhen. Darüber hinaus treten beim Anfahren und Abbremsen erhebliche Momente auf, welche den gesamten Schrank in Schwingungen versetzen oder zum Kippen der gelenkig aufgehängten Tablare führen können. Zur Vergrößerung der Fördergeschwindigkeiten bei derartigen Umlaufförderern ist es z. B. aus der DE-PS 23 27 077 bekannt, die beiden Enden der Spreizhebel ihrerseits wiederum an Gelenken je eines inneren, an der Kette angeordneten Spreizhebels oder an Gelenken von zwischengeschalteten weiteren Spreizhebeln anzulenken. Durch diese Aufhängung der Tablare soll erreicht werden, daß die Geschwindigkeitsunterschiede zwischen den geraden vertikalen Strecken und den bogenförmigen Umlaufstrecken vermindert werden. Eine exakte Führung der Tablare und der einzelnen Kettenstränge ist weder in den vertikalen noch in den bogenförmigen Umlaufbahnen vorgesehen und möglich.

Bei einer horizontal ausgerichteten Warenspeicheranlage gemäß DE-AS 2 018 905 wird eine Vorrichtung zum Führen von Profilträgern in waagerechter Lage beim Umlauf um die Kettenräder zweier endloser Rollenketten eingesetzt. Diese Profilträger sind schwenkbar an den Stirnseiten von Kettentransportgliedern angelenkt und drehfest mit einem Winkelhebel verbunden, an dessen Enden Trag- und Führungsrollen vorgesehen sind. Beim Umlaufen um die Kettenräder vom Ober- zum Untertrumm der Endloskette sind diese Führungsrollen an außerhalb der Kettenbahn vorgesehenen Führungsleisten abgestützt.

Schließlich ist ein mechanischer Schrank mit einem paternosterförmigen Umlaufförderer zur Lagerhaltung von insbesondere Industrieartikeln bekannt, bei dem die Tablare an ihren Stirnseiten über im Schwerpunkt gelenkig angreifende Spreizhebelpaare an zwei Endlosketten aufgehängt sind. Um die insbesondere bei ungleichmäßig beladenen Tablaren auftretenden hohen Momente, welche zu Auslenkbewegungen der Kettenstränge führen, aufnehmen zu können, sind bei dieser Ausführung an den Tragzapfen der Tablare schräge Führungsarme mit Laufrollen an ihren Enden starr befestigt, die in einer aus vertikalen und bogenförmigen Abschnitten gebildeten Führungsbahn von U-förmigem Querschnitt geführt sind. Um die Auslenkbewegungen der Kettenstränge im Bereich der vertikalen Bewegungsbahnen aufnehmen zu können, sind weitere Laufrollen und eine in sich geschlossene, aus vertikalen Abschnitten gebildete weitere Führungsbahn notwendig. Obgleich diese Ausführung aufgrund der an jeder Schrankschmalseite vorgesehenen zweifachen Führungsbahnen auch für hochbelastbare mechanische Schränke recht gut geeignet ist, erfordert jedoch einen vergleichsweise hohen konstruktiven Aufwand, weil die an jeder Schrankschmalseite notwendigen zweifachen Führungsbahnen sehr genau bearbeitet bzw. geformt werden müssen, um einen angestrebten Gleichlauf zu erreichen.

Aufgabe der Erfindung ist es, einen mechanischen Schrank mit einem paternosterartigen Umlaufförderer zu schaffen, der bei hoher Eigenstabilität eine sichere und kippfreie Aufnahme und Führung der Tablare unabhängig von ihrem jeweiligen Beladungszustand bei verringertem konstruktiven Aufwand ermöglicht.

Erfindungsgemäß wird diese Aufgabe dadurch gelöst, daß an jedem der - an den Stirnwänden der Tablare starr befestigten - Führungsglieder zwei Führungselemente mit vertikalem Zwischenabstand gelagert sind, wobei in den vertikalen Abschnitten der Führungsschienen beide Führungselemente gemeinsam und in den Bogenabschnitten der Führungsschienen nur jeweils ein Führungselement geführt sind.

Durch diese erfindungsgemäße Ausbildung des mechanischen Schrankes ergibt sich gegenüber gattungsgleichen Ausführungen eine wesentliche Verringerung des Herstellungsaufwandes bei hoher Gesamtstabilität, weil die Tablare während ihrer vertikalen und ihrer bogenförmigen Umlaufbewegung zwangsweise und gegenüber Kipp- bzw. Schwenkbewegungen gesichert in nur einer einzigen umlaufenden Führungsbahn geführt sind. Diese sichere Führung in den vertikalen Bewegungsbahnen wird durch die Anordnung der beiden - zweckmäßig als Laufrollen ausgebildeten - Führungselemente mit vertikalem Zwischenabstand an den mit den Tragzapfen der Tablare fest verbundenen Führungsgliedern' erreicht. Bei vertikaler Anordnung laufen die Führungselemente in den vertikalen Abschnitten der Führungsschiene und verhindern aufgrund ihres Zwischenabstandes Kippbewegungen der Tablare aufgrund eines ungleichmäßigen Beladungszustandes und/oder beim Anfahren bzw. Abbremsen des Umlaufförderers. Beim Überführen eines Tablares von einer vertikalen Bewegungsbahn in die andere gelangt eines der Führungselemente aus der ihm zugeordneten Führungsschiene heraus und nur das andere Führungselement jedes Führungsgliedes wird in dem jeweils bogenförmigen Abschnitt der Führungsschiene zwangsgeführt. Eine Kippbewegungen der Tablare in diesem kritischen Umlaufbereich sicher vermeidende Abstützung wird in diesen Bewegungszuständen durch ein kräftemäßiges Abstützungs-Vieleck erreicht, welches von dem in der Schiene geführten Führungselement über das Führungsglied und den mit diesem fest verbundenen Tragzapfen des Tablars sowie über die einerseits am Tragzapfen und andererseits an zwei mit dem Kettenrad in Eingriff befindlichen Bolzen der Endloskette gebildet wird. Die sehr genau herzustellende und besonderen mechanischen Beanspruchungen ausgesetzte bogenförmige Führungsschiene für das zweite Führungselement im oberen und unteren Umlaufbereich ist nicht notwendig, was die Herstellung, Wartung und Instandsetzung des erfindungsgemäßen Umlaufförderers vereinfacht.

Wenn gemäß einer zweckmäßigen Ausgestaltung der Erfindung die Spreizhebel- bzw. Tragarmpaare derart angeordnet werden, daß jeder untere Tragarm eines Tragarmpaares und jeder obere Tragarm des nächstfolgenden Tragarmpaares auf dem gleichen Kettenbolzen der Endloskette gelagert sind, dann wird eine sichere und stabile Schwerpunkt-Führung auch in den bekanntermaßen besonders kritischen Abschnitten kurz unmittelbar vor bzw. nach dem Auf- bzw. Ablaufen eines einen Tragarm stützenden Kettengliedes auf den jeweiligen Zahnkranz erreicht. Auch in diesem kritischen Zustand ist eine Sicherung der einzelnen Tablare gegenüber Kippbewegungen um ihre durch die Tragbolzen gehende Längsachse gewährleistet, obwohl ein Führungselement bereits aus dem vertikalen Abschnitt der zugeordneten Führungsschiene herausgelangt ist. Bei dieser Anordnung der Tragarmpaare wird die Sicherung des in den Übergangsbereich einlaufenden Tablars gegen Kippbewegungen über das nächstfolgende Tragarmpaar und dessen Führungsglied übernommen, welches noch mit beiden Führungselementen in dem vertikalen Abschnitt der Führungsschiene geführt ist.

Zweckmäßig sind die beiden umlaufenden Führungsschienen an stabilen Gerüststreben montiert, die einen Teil des verwindungssteifen Tragrahmens des Umlaufförderers bilden. Dabei können die Tragzapfen der Tablare an der jeweiligen Innenseite der Führungsglieder durch eine Schweiß-, Schrumpf- oder Keilnutverbindung axial neben dem Lager für die Tragarme befestigt sein. Die Führungselemente in Form von Laufrollen oder Gleitschuhen sind dann an der Außenseite der Führungsglieder derart angeordnet, daß die zueinander parallelen Mittelachsen des Tragzapfens und der oberen Laufrolle bei allen Führungsgliedern in der gleichen Ebene liegen.

Gemäß einer weiteren zweckmäßigen Ausgestaltung der Erfindung haben die Führungsschienen in den vertikalen Abschnitten doppelte und in den Bogenabschnitten einfache Tiefe und die beiden Führungselemente jedes Führungsgliedes sind durch unterschiedlich lange Lagerzapfen um mindestens die einfache Tiefe der Bogenabschnitte seitlich gegeneinander versetzt am Führungsglied angeordnet. Diese Ausgestaltung hat den Vorzug, daß bei Verwendung von einfachen Führungsschienen mit U-Querschnitt ein gleichmäßiger Übergang von den vertikalen Abschnitten zu den bogenförmigen Abschnitten erreicht werden kann, wobei in den Übergangsabschnitten die beiden Schenkel des U-Querschnittes der Schienen lediglich so weit verkürzt werden müssen, daß eines der Führungselemente stoßfrei von dem ihm zugeordneten Abschnitt der Führungsschiene freikommt.

Zweckmäßig sind die beiden Führungselemente am jeweiligen Führungsglied vertikal übereinander mit Zwischenabstand angeordnet und das untere Führungselement wird in den vertikalen und den bogenförmigen Abschnitten der Führungsschiene geführt, wohingegen das obere Führungselement aus der ihr zugeordneten Führungsschiene in den bogenförmigen Abschnitten freikommt.

Bezüglich der Herstellung der Führungsglieder und auch der stabilen Halterung und Führung der Tablare ist eine Ausgestaltung der Erfindung besonders zweckmäßig, bei der die Führungsglieder spiegelbildlich zueinander versetzt an den beiden Stirnwänden der Tablare befestigt sind, wobei die beiden Führungsschienen gegeneinander und zur Mittelebene der beiden Endlosketten seitlich um entsprechende Beträge versetzt angeordnet sind. Durch diese Ausgestaltung wird erreicht, daß jeweils gleich ausgebildete Führungsglieder mit Führungselementen (Laufrollen) für die Aufhängung der Tablare an beiden Stirnseiten verwendet werden können, und daß ferner instabile Lagen der Tablare in den Scheitelbereichen der bogenförmigen Schienenabschnitte vermieden werden.

Eine betriebstechnisch günstige Weiterbildung der

- 11 -

0114671

Erfindung zeichnet sich dadurch aus, daß sich die Tablare auf ihrer vertikalen Bewegungsbahn aufeinander abstützen können. Dadurch kann das Gewicht beispielsweise eines vollbeladenen Tablars zumindest teilweise auf die Stützorgane der nächstunteren Tablare übertragen werden, so daß Spitzenbelastungen einzelner Kettenglieder und Lager vermieden werden. Darüber hinaus bilden die sich aufeinander abstützenden Tablare quasi eine vertikale Säule und tragen damit zur Verwindungssteifigkeit der gesamten Schrankkonstruktion insbesondere auch beim Anfahren und Abbremsen bei. Dies eröffnet die Möglichkeit einer hohen ggf. außermittigen Belastung und Beladung der einzelnen Tablare und vermindert stoßartige Belastungen der Einzelteile.

Die Erfindung bietet ferner die hinsichtlich der Investitionskosten ebenso wie hinsichtlich der Wartung vorteilhafte Möglichkeit, daß herkömmliche Laschenketten als Endlos-Förderorgane verwendet werden können, wobei die Kettenbolzen zur Lagerung der jeweiligen Tragarme ebenfalls normale Kettenbolzen z. B. von Doppelketten sein können. Um einen schonenden Eingriff der Ketten beim Auflaufen bzw. Ablaufen auf bzw. von den Kettenrädern zu ermöglichen, können in diesen Bereichen kurze Gleitführungen aus einem geeigneten Gleitmaterial, z. B. Kunststoff, ortsfest montiert sein, an denen die Rollen bzw. Buchsen der Ketten gestützt geführt werden.

Nach längeren Betriebszeiten tritt zwangsläufig eine Längung der beiden Endlosketten ein, die bisher durch manuelle Operationen, z. B. durch Versetzen der Antriebswelle der beiden Kettenräder, beseitigt wurde, was langwierige Wartungsarbeiten erforderte, wobei sich die Ansteuergenauigkeit und auch die Betriebssicherheit des mechanischen Schrankes durch die allmählich zunehmende Lose der Endlosketten zwischen den Wartungsintervallen verringerte. Gemäß einer zweckmäßigen Ausgestaltung der Erfindung ist eine selbsttätige Spannvorrichtung für jede Endloskette vorgesehen, die ständig wirksam ist und die Ketten unter einer gleichbleibenden Spannung hält. Gleichzeitig ist zumindest einer der Bogenabschnitte jeder Führungsschiene längsverschiebbar mit den beiden vertikalen Abschnitten verbunden und entsprechend den Spannbewegungen der Endloskette bewegbar. Durch eine mechanische Kopplung der Spannvorrichtung mit dem Bogenabschnitt wird auf einfache Weise eine synchrone Bewegung des Kettenrades und des Bogenabschnittes erreicht.

Wenn der Antrieb der Endlosketten bzw. der Verbindungswelle der beiden unteren Kettenräder durch einen stationären Elektromotor erfolgt, dann ist es zweckmäßig, als Übertragungsmittel von der Motor-Abtriebswelle zur Kettenrad-Welle eine Antriebskette zu verwenden und eine Vorrichtung vorzusehen, um die Spannbewegungen der beiden angetriebenen Kettenräder der beiden Endlosketten auszugleichen. Die Vorrichtung weist zweckmäßig ein Spannrad auf, das mit einer von den Spannbewegungen des jeweiligen Kettenrades unabhängigen und gleichbleibenden Kraft gegen die Antriebskette drückt und gegen Auslenkbewegungen - in Gegenrichtung - gesperrt ist.

Um beliebige ausgewählte Tablare in die Entnahmestellung des Schrankes zu verfahren, ist eine elektronische Steuerung mit Endschaltern an jedem Tablar vorgesehen. Weitere Endschalter ermöglichen auch das Stillsetzen eines Tablars in einer Zwischenstellung, was die
Verwendung von Tablaren mit Zwischenböden, z. B. zur
Lagerhaltung von Kleinartikeln, ermöglicht.

Im folgenden werden Ausführungsbeispiele der Erfindung anhand der Zeichnung im einzelnen beschrieben. Es
zeigen:

Fig. 1          schematisch einen unverkleideten
                mechanischen Schrank mit zwei Endlosketten und den daran angehängten
                Tablaren;

Fig. 2          ein plattenförmiges Führungsglied
                mit dem Tablar-Tragzapfen und einem
                Teil eines darauf gelagerten Tragarmpaares;

Fig. 3          schematisch den unteren Teil einer
                Führungsbahn mit einer Spannvorrichtung für eine Endloskette;

Fig. 4          den Schrankteil nach Fig. 3 im
                Schnitt;

Fig. 5          schematisch den unteren Teil des
                Schrankes mit der Spanneinrichtung
                der Endlosketten und einem Kettentrieb mit Ausgleichsvorrichtung;

Fig. 6          die Einzelheit E in Fig. 5;

Fig. 7          Schnittdarstellungen der schrauben-
bis 9          losen Befestigung von Verkleidungsblechen;

Fig. 10         den Teil eines Tablars in perspektivischer Darstellung.


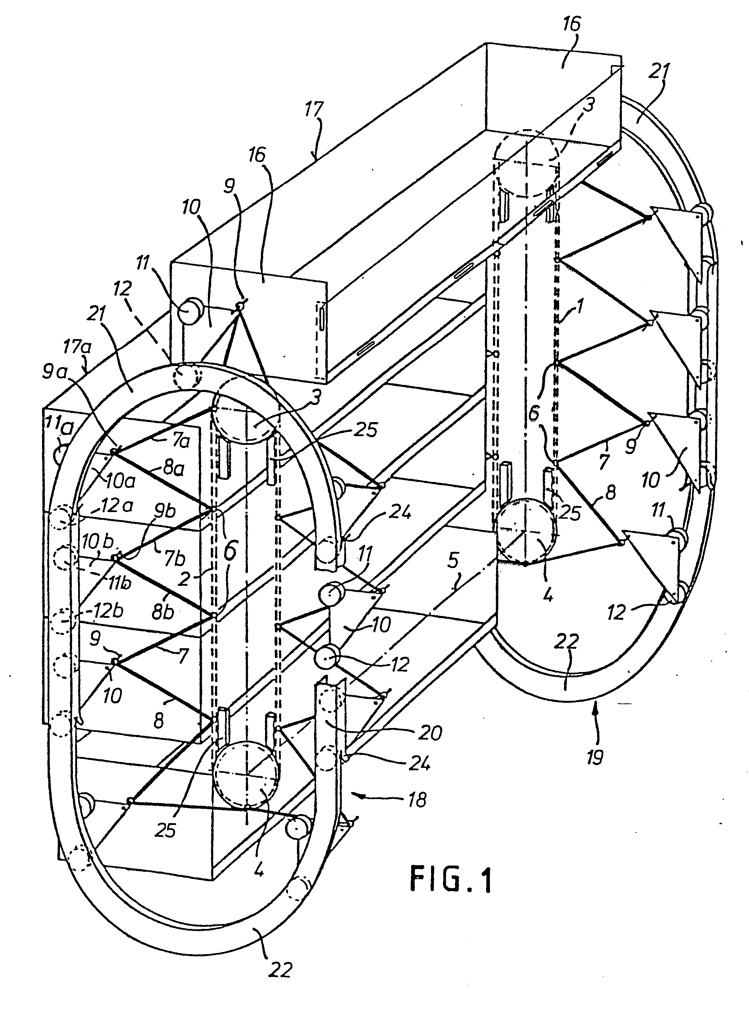

Bei dem in Fig. 1 dargestellten Umlaufförderer für einen mechanischen Schrank sind die Einzelteile des Schrankes, der Tragrahmen für den Umlaufförderer zum Erhalt einer größeren Klarheit nicht dargestellt. Es sei nur bemerkt, daß aus Montagegründen die einzelnen Seitenwände des Schrankes demontierbar ausgebildet sind und eine in sich verwindungssteife Rahmenkonstruktion für den Umlaufförderer und für die Schrankwände vorgesehen ist, in deren Bodenteil die ebenfalls nicht dargestellten Aggregate, wie Antriebsmotor und Getriebe für die Endlosketten, Steuerung ect., untergebracht sind.

Wie ersichtlich, weist der dargestellte Umlaufförderer zwei Endlosketten 1, 2 auf, von denen jede über je ein oberes und unteres Kettenrad 3, 4 läuft. Die durch die beiden Achsen 5 der oberen und unteren Kettenräder gebildete Vertikalebene definiert die Mittelebene des mechanischen Schrankes.

An ausgewählten verlängerten Bolzen 6 der Endlosketten sind Tragarme drehbar gelagert, wobei jeweils zwei Tragarme 7, 8 ein Tragarmpaar bilden und mit ihren beiden freien Enden auf einem Tragzapfen 9 gelagert sind.

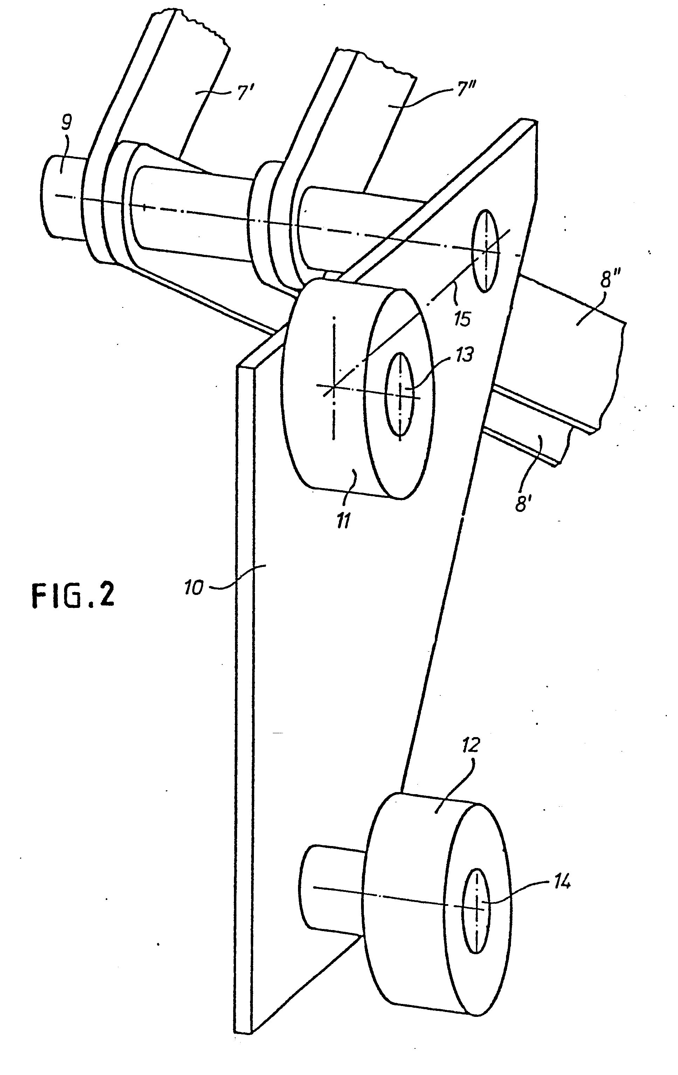

Wie aus Fig. 2 ersichtlich, besteht jeder Tragarm 7 bzw. 8 aus jeweils zwei gleichen Flacheisen 7a, 7b bzw. 8a, 8b, die mit axialem Abstand auf dem Tragzapfen 9 sitzen. Diese Ausbildung der Tragarme ergibt eine vergleichsweise hohe Steifigkeit bei einfachster Herstellung der Tragarme durch Stanzen. Am freien Ende jedes Tragbolzens 9 ist ein Führungsglied 10 starr und gegen Verdrehung gesichert befestigt, das gemäß Fig. 2 als etwa dreieckförmige steife Metallplatte ausgebildet sein kann. An diesem plattenförmigen Führungsglied 10 sind zwei Führungselemente 11, 12 in Form von Laufrollen auf unterschiedlich langen Zapfen 13, 14 mit vertikalem Zwischenabstand übereinander gelagert, wobei die Mittelachsen des Tragzapfens 9 und des Lagerzapfens 13 der oberen Laufrolle 11 beim dargestellten besonders zweckmäßigen Ausführungsbeispiel in einer durch die Verbindungsgerade 15 gekennzeichneten Horizontalebene verlaufen. Wie ersichtlich, ist die untere Laufrolle 12 mindestens um die Breite der oberen Laufrolle 11 axial durch Verwendung eines entsprechend längeren Lagerzapfens 14 versetzt.

Jeder Tragzapfen 9 ist drehfest an einer Stirnwand 16 eines in sich formsteifen Tablars 17 befestigt. Jedes Tablar weist somit an seiner schmalen Stirnwand 16 je ein über den Tragzapfen 9 starr daran befestigtes Führungsglied 10 mit zwei Laufrollen 11, 12 als Führungselemente auf. Die Führungselemente 11, 12 jeder Stirnseite sind in je einer geschlossenen Führungsbahn 18 bzw. 19 geführt, von denen jede aus zwei vertikalen Abschnitten 20 und einem oberen bzw. unteren bogenförmigen Verbindungsabschnitt 21 bzw. 22 besteht. In den vertikalen Abschnitten 20 der Führungsschienen 18 bzw. 19 von zweckmäßig U-förmigem Profil sind jeweils beide Führungselemente 11, 12 der betreffenden Tablare geführt. Zu diesem Zwecke weisen die Führungsschienen in diesen Abschnitten eine Tiefe auf, die der versetzten Anordnung der Führungselemente 11, 12 entspricht. Am Ende jedes vertikalen Abschnittes verringert sich sprungartig die Tiefe der Führungsschienen so weit, daß die Tiefe in den bogenförmigen Abschnitten 21 bzw. 22 auf einen Betrag, welcher zur Führung der unteren Laufrolle 12 jedes Führungsgliedes 10 ausreicht, während die jeweils obere Laufrolle 11 aus der Führungsschiene freikommt und ohne eigene Führung eine bogenförmige Bahn von anderer Gestalt beschreibt. Um ein stoßfreies Ein- bzw. Auslaufen der oberen Laufrollen 11 aus ihren zugeordneten Vertikalabschnitten der Führungsschienen zu gewährleisten, sind am Ende und Anfang dieser Vertikalabschnitte 20 Ein- bzw. Auslaufbögen 24 ausgebildet.

Wie aus Fig. 1 ersichtlich, sind die beiden geschlossene Schleifen bildenden Führungsschienen 18, 19 zur durch die Mittelachse 5 laufenden Vertikalebene um jeweils gleiche Beträge seitlich gegeneinander versetzt angeordnet. Dies hat zur Folge, daß die in der Führungsschiene 18 laufenden Führungsglieder 10 mit ihrer den Tragbolzen 9 aufnehmenden Spitze nach rechts weisen, wohingegen die in der schleifenförmigen Führungsschiene 19 laufenden Führungsglieder mit ihrer die entsprechenden Tragbolzen aufnehmenden Spitze nach links weisen. Alle Führungsglieder 10 können demzufolge gleich ausgebildet werden, wobei die Führungsglieder an einem Stirnende der Tablare gegenüber den Führungsgliedern am anderen Stirnende der Tablare jeweils um 180° spiegelbildlich versetzt angeordnet sind. Diese seitliche Versetzung bewirkt eine stabile Abstützung der Tablare auch beim Durchlaufen der Scheitelbereiche der bogenförmigen Schienenabschnitte 21, 22, wie dies in Fig. 1 für das oberste Tablar dargestellt ist. Wie ersichtlich, befindet sich dessen untere Laufrolle 12 genau im oberen Scheitelpunkt der bogenförmigen Führungsbahn 21 der Führungsschiene 18.

Wenn das Führungsglied 10 einer Tablarstirnseite den kritischen Scheitelbereich der bogenförmigen Führungsbahn 20 durchläuft, könnte - ohne gegenseitige Versetzung der Führungsschienen und spiegelbildliche Anordnung der Führungsglieder - das Tablar 17 geringfügig schwenken oder kippen. Dies wird jedoch verhindert durch die versetzte Anordnung der in Fig. 1 hinteren zweiten Führungsschiene 19, da dann auch der entsprechende Auflage- bzw. Führungspunkt für die hintere Laufrolle 12 gegenüber demjenigen der vorderen Laufrolle 12 versetzt ist und auf diese Weise wieder eine Mehrpunkt-Abstützung des Tablars zustandekommt. Da sich somit in jedem Moment mindestens eines der beiden Führungsglieder in einer stabilen Führungsposition befindet, kann das Tablar 17 selbst bei außermittiger Belastung sicher durch den Totpunktbereich eines jeden Führungsgliedes bewegt werden.

Um einen stoßfreien und gleichmäßigen Auf- und Ablauf der als normale Laschenketten ausgebildeten Endlosketten 1, 2 auf bzw. von den Kettenrädern 3, 4 sicherzustellen, sind in diesen Bereichen Gleitführungen 25 ortsfest montiert, die beispielsweise aus einem geeigneten Kunststoff, wie PVC, bestehen können.

Bei der erfindungsgemäßen Verwendung von jeweils nur einer einzigen schleifenförmigen Führungsschiene 18 bzw. 19 an jeder Stirnseite und der abgestuften Tiefe der Führungsschienen am Übergang von den vertikalen zu den bogenförmigen Abschnitten wird die Lage dieses Übergangs und der jeweiligen Ein- bzw. Ausläufe 24 der Führungsschienen auf die Größe der Tragarme 7, 8 und der Führungsglieder 10 so abgestimmt, daß die einzelnen Tablare auch in dem Moment stabil und schwingungsfrei geführt sind, wenn die jeweils obere Laufrolle 11 gerade aus ihrer vertikalen Führungsschiene 20 freikommt. Dieser Zustand ist für das oberste Tablar 17a der sich direkt vertikal aufeinander abstützenden Tablare dargestellt, dessen oberer Tragarm 7a mit seinem Kettenbolzen auf das obere Kettenrad 3 bereits aufgelaufen ist und dessen obere Laufrolle 11a bereits aus dem vertikalen Abschnitt 20 der Führungsschiene 18 herausgelaufen ist. In diesem und in einem unmittelbar sich anschließenden Zustand erfolgt die kippfreie Führung und Abstützung des Tablars 17a durch die - nach wie vor - im bogenförmigen Abschnitt 21 geführte untere Laufrolle 12a, das plattenförmige Führungsglied 10a, den Tragarm 7a und den unteren Tragarm 8a. Auslenkbewegungen der Kette im Kraftangriffspunkt des unteren Tragarmes 8a werden dadurch verhindert, daß der obere Tragarm 7b des nächstfolgenden Tragarmpaares über den Tragzapfen 9b und das Führungsglied 10b abgestützt ist, dessen beide Führungselemente 11b und 12b im vertikalen Abschnitt der Führungsschiene geführt sind. Durch diese Übertragung der Abstützkräfte auf benachbarte Tragarmpaare werden unerwünschte Kippbewegungen der Tablare sowie Beanspruchungs-Summierungen insbesondere im Bereich der verschiedenen Gelenke und der Kettenlaschen vermieden.

Darüber hinaus sind erfindungsgemäß die einzelnen Tablare so ausgebildet, daß sie sich - wie in Fig. 1 auf der linken Seite dargestellt - in ihren vertikalen Bewegungsbahnen direkt aufeinander abstützen, so daß sich die auf die Endlosketten einwirkenden Tragkräfte ausgleichen.

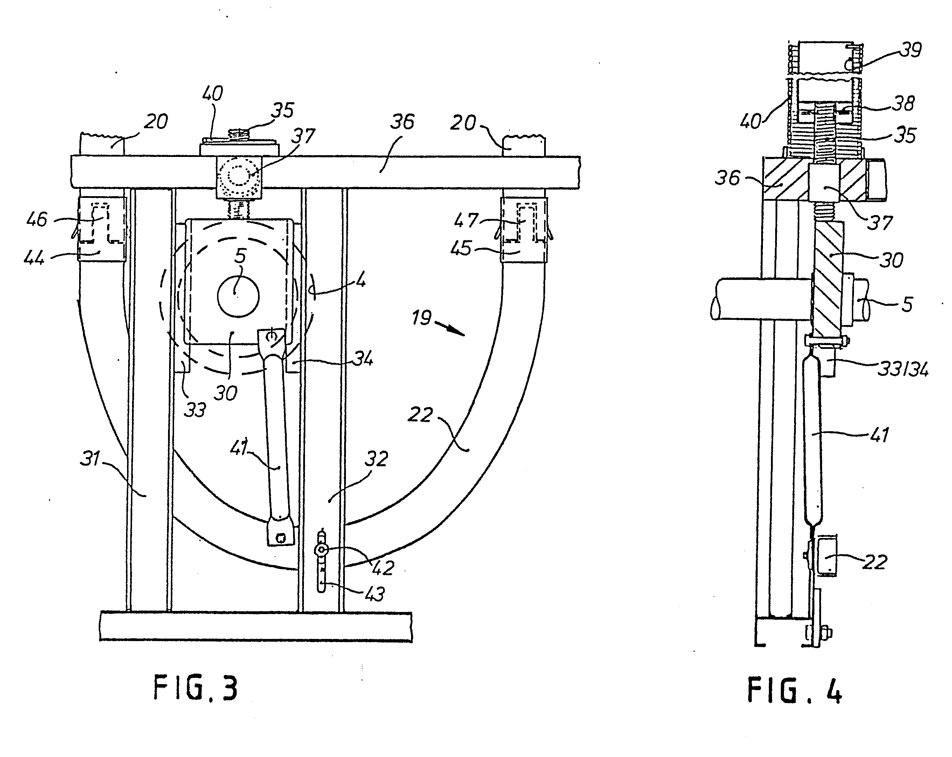

Wie aus den Fig. 3, 4 ersichtlich, ist jedes der beiden durch die Welle 5 miteinander drehfest verbundenen Kettenräder 4 in einem Einbaustück 30 gelagert, das beidseitig an mit Ständern 31, 32 fest verbundenen Führungsschienen 33, 34 vertikal verschiebbar geführt ist. Gegen die Oberseite des Einbaustücks 30 drückt das untere Ende einer Spindel 35, die in einer an einem Rahmenträger 36 festgelegten Gewindebuchse 37 geführt ist. Wie insbesondere aus Fig. 4 ersichtlich, ist das obere Ende der Spindel 35 durch einen Querstift 38 mit einem Rohr 39 drehfest verbunden. Eine um dieses Rohr 39 und den oberen Teil der Spindel 35 gewickelte Torsionsfeder 40 ist mit ihrem unteren Ende am Querträger 36 und mit ihrem oberen Ende am Rohr 39 festgelegt. Die Torsionsfeder 40 hat eine ausreichende Länge von ca. 50 bis 90 cm und übt auf die Spindel eine in Einschraubrichtung wirkende Drehkraft aus, deren Größe unabhängig von der Einschraubtiefe der Spindel 35 in die Gewindebuchse 37 bzw. von der Höhenlage des Einbaustückes 30 etwa konstant ist. Am unteren Ende des Einbaustücks 5 ist eine Schubstange 41 gelenkig befestigt, der etwa im Scheitelbereich des unteren bogenförmigen Abschnitts 22 der Führungsbahn 19 angreift. Dieser Bogenabschnitt 22 ist über einen Zapfen 42 in einem Langloch 43 des Ständers 32 vertikal verschiebbar geführt. Die beiden Enden des bogenförmigen Bahnabschnitts 22 sind über je eine Gleitvorrichtung 44, 45 an den unteren Enden der vertikalen Führungsbahnabschnitte 20 längsverschiebbar angeschlossen. Um ein stoßfreies Überlaufen der Rollen 11, 12 in bzw. aus dem bogenförmigen Abschnitt 22 zu ermöglichen, auch wenn dieser umbestimmte Beträge nach vertikal unten verschoben worden ist, sind in den Gleitvorrichtungen 44, 45 ineinandergreifende Laschen und Ausschnitte 46, 47 vorgesehen, die auch in einer auseinandergezogenen Lage eine ebene Lauffläche für die Rollen aufgrund ihres "Zahneingriffes" bilden.

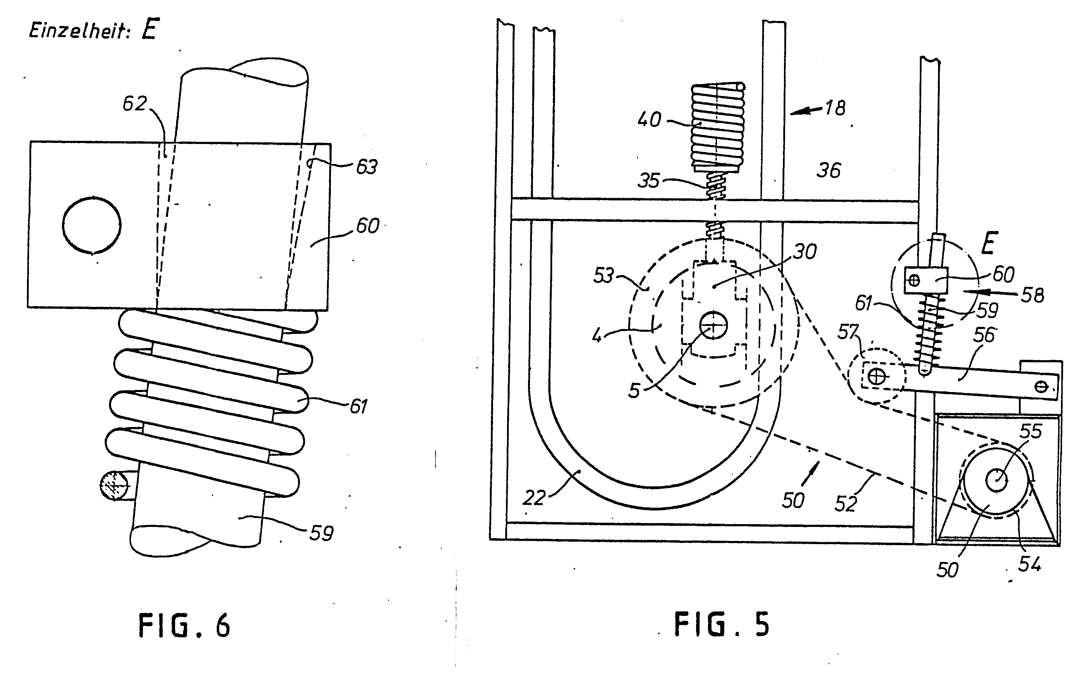

In Fig. 5 ist schematisch der Antrieb des einen Kettenrades 4 mittels eines am Schrankgehäuse befestigten Elektromotors 50 über einen Kettentrieb 51 dargestellt. Eine Endloskette 52 läuft über ein auf der Welle 5 drehfest aufgezogenes Kettenrad 53 und ein Antriebsrad 54, welches auf der Motorabtriebswelle 55 sitzt. Um die vertikalen Verschiebebewegungen der Welle 5 auszugleichen und die Spannung der Endloskette 52 konstantzuhalten, ist eine Vorrichtung vorgesehen, die aus einem am Rahmen angelenkten Schwenkhebel 56 mit einem frei gelagerten Spannrad 57 an seinem freien Ende und aus einem Krafterzeuger 58 besteht. Dieser Krafterzeuger enthält eine am Hebel 56 angelenkte Stange 59, die ein Klemmschloß 60 durchragt und in ihrem Abschnitt zwischen dem Hebel 56 und dem Klemmschloß 60 von einer Schraubenfeder 61 umgeben ist. Wie aus Fig. 6 ersichtlich, weist das an einer Gerüststrebe befestigte Klemmschloß 60 eine Öffnung 62 auf, deren eine Stirnfläche 63 schräg nach außen verläuft und der Öffnung 62 eine keilförmige Form gibt. Im unteren engsten Bereich entspricht die Öffnungsweite etwa dem Durchmesser der Stange 59. Aufgrund der dargestellten Schräglage dieser Stange 59 und der angegebenen Form der Öffnung 62 ergibt sich eine Klemmwirkung zwischen dem Schloß 60 und der Stange 59 gegenüber Verschiebebewegungen der Stange 59 nach oben. Da die Schraubenfeder 61 sich einerseits am Klemmschloß 60 und andererseits an dem Hebel 56 abstützt, übt sie eine kontinuierliche Druckkraft gegen den Hebel 56 aus und drückt damit das Laufrad 57 mit einer vorgegebenen etwa konstanten Kraft gegen die Endloskette 52.

Nach längeren Betriebszeiten des mechanischen Schrankes tritt zwangsläufig eine Längung der beiden Endlosketten 1, 2 auf, die bei Schrankhöhen von bis zu 6 m im Bereich einiger cm liegt. Diese Längung wird durch die vorstehend beschriebenen Maßnahmen selbsttätig ausgeglichen, ohne daß besondere Wartungsarbeiten notwendig wären. Bei jedem Umlauf der ggf. teilweise beladenen Tablare tritt kurzfristig ein Zustand auf, bei welchem die gesamte Last der Tablare über die Endlosketten symmetrisch verteilt von den beiden oberen Kettenrädern 3 aufgenommen wird. In diesem Zustand ist das jeweils untere Kettenrad 4 vom Gewicht der Tablare entlastet. Diesen Tatbestand nutzt die erfindungsgemäße Spannvorrichtung aus. Die Torsionsfeder 40 übt auf die Spindel 35 eine ständige Drehkraft aus und sucht diese in die Gewindebuchse 37 einzuschrauben. Sobald das Kettenrad 4 bzw. die Verbindungswelle 5 und das jeweilige Einbaustück 30 sich in dem unbelasteten Zustand befinden, reicht diese auf die Spindel 35 einwirkende Drehkraft aus, um diese geringfügig weiter in die Gewindebuchse 37 einzuschrauben und dabei das Einbaustück 30 um einen entsprechend geringen Betrag nach unten zu verschieben, und zwar soweit, bis die eingetretene Längung der Endloskette 1, 2 ausgeglichen ist und diese wieder ihre ursprüngliche Spannung erhalten hat. Damit die optimalen Führungsabstände zwischen den Kettenrädern und den Führungsgliedern 10 bzw. deren Laufrollen 12 aufrechterhalten bleiben, sind - wie in Fig. 3 gezeigt - die unteren Bogenabschnitte 22 der Führungsbahnen 18, 19 vertikal verschiebbar an die geraden Abschnitte 20 über die Einrichtungen 44, 45 angeschlossen. Gleichzeitig mit der Spannbewegung der Endlosketten 1, 2, d. h. der vertikalen Verschiebebewegung der Einbaustücke 30, erfolgt eine Verschiebebewegung der unteren Bogenabschnitte 22, und zwar durch die mechanische Kopplung dieser Bogenabschnitte 22 mit dem Einbaustück 30 über die Schubstange 41. Dabei wird der Bogenabschnitt 22 über den Zapfen 42 im Langloch 43 des Ständers 32 geführt.

Aufgrund der vorstehend beschriebenen Ausgleichsbewegung der unteren Kettenräder 4 ergibt sich eine entsprechende Änderung der Relativposition zwischen den beiden Kettenrädern 53 und 54. Um die Antriebskette 52 unter der notwendigen gleichbleibenden Spannung zu halten, greift die federbelastete Vorrichtung 58 am Hebel 56 an und drückt dessen Spannrad 57 mit einer vorgegebenen Kraft gegen das Obertrumm der Antriebskette 52. Da die Tablare stets auf dem kürzesten Weg in die End- und Beladestellung verfahren werden, läuft der E-Motor 50 wahlweise in beiden Drehrichtungen. Damit beim Umlauf in der durch den Pfeil P gekennzeichneten Richtung das Spannrad 57 nicht durch die Kette 52 weggedrückt werden kann, wodurch die Kettenspannung verlorenginge, ist die in Fig. 6 als "Einzelheit E" vergrößert dargestellte Klemmvorrichtung 58 vorgesehen, die Aufwärtsbewegungen des Hebels 56 und der Stange 59 verhindert.

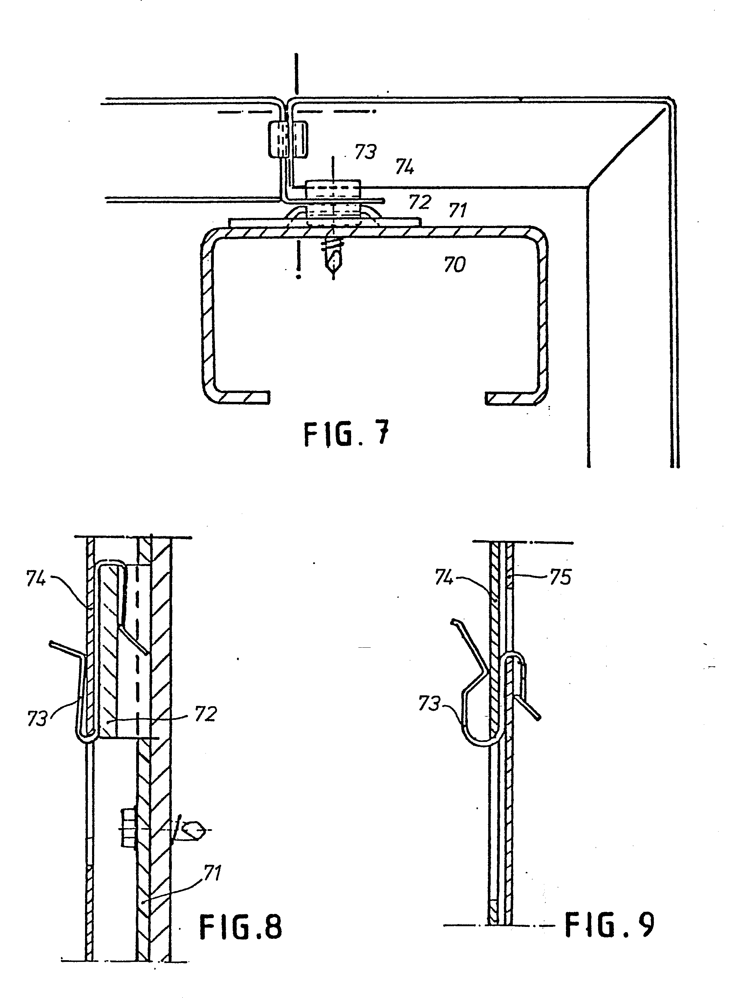

In den Fig. 7 bis 9 ist eine Möglichkeit gezeigt, die Blechverkleidungen des mechanischen Schrankes auf einfachste Weise schraubenlos zu befestigen. An geeigneten Ständern oder Querstreben des Rahmengerüstes, z. B. dem Ständer 70, sind Bleche 71 befestigt, die herausgedrückte Stege 72 aufweisen. In die durch die Stege 72 begrenzten Öffnungen sind etwa S-förmig gebogene Federspangen 73 mit einem Schenkel eingesetzt, in deren anderen Schenkel ein Verkleidungsblech 74 eingehängt ist. Diese Federspangen 73 können die in Fig. 8 bzw. 9 dargestellte Form haben. Wie in Fig. 9 gezeigt, besteht auch die Möglichkeit, mit diesen Federspangen 73 zwei Bleche 74, 75 direkt lösbar miteinander zu verbinden.

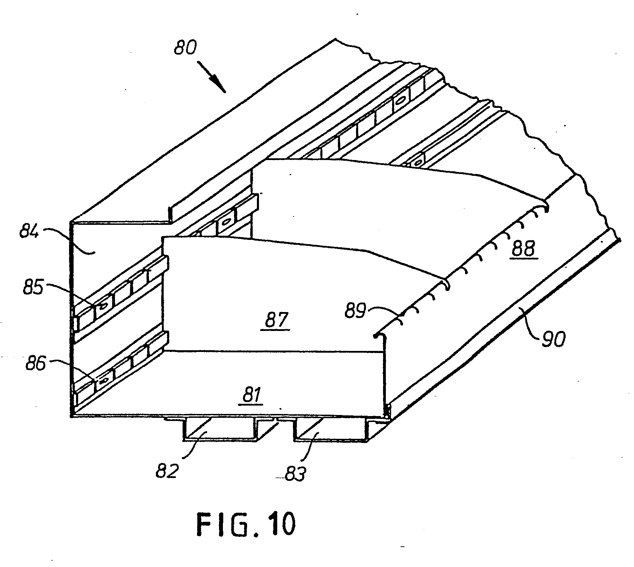

Das in Fig. 10 dargestellte Tablar 80 besteht aus einem durchgehend ebenen Boden 81, an dessen Unterseite zwei Versteifungsholme 82, 83 starr befestigt sind. An der Rückseite 84 sind zwei Reihen von Schlitz-Haltern 85, 86 befestigt, in deren Schlitze Querwände 87 mit ihren hinteren Kanten eingesteckt werden können. Die vordere Stirnwand 88 des Tablars ist in Form einer an ihrem oberen Ende 89 umgebogenen und mit Schlitzen versehenen Leiste ausgebildet, die mit ihrem unteren Rand in einen Falz eingehängt werden kann, welcher durch Umbiegen einer Stirnleiste 90 gebildet ist. Aufgrund dieser Ausbildung bietet sich die Möglichkeit, die stirnseitig offenen Tablare gemäß Fig. 1 in sog. Wannentablare mit Seitenfächern umzurüsten. Zu diesem Zweck ist es lediglich notwendig, die Stirnwand 88 in die Stirnleiste 90 einzuhängen und die Zwischenwände 87 von oben in die entsprechenden Schlitze einzuschieben, wobei diese Zwischenwände 87 gleichzeitig zur Abstützung der gelenkig eingehängten Stirnwand 88 dienen und zur Versteifung des gesamten Tablars beitragen. Um eine direkte Abstützung der einzelnen Tablare aufeinander im Bereich der vertikalen Führungsbahnen 20 zu erreichen, sind die Endwände an den Tablarschmalseiten ausreichend steif ausgebildet, um eine formschlüssige Auflage der Bodenholme 82, 83 zu ermöglichen, wobei durch den Formschluß der Auflage seitliche Horizontalbewegungen der einzelnen aufeinander abgestützten Tablare vermieden werden.

Die Erfindung ist nicht auf das dargestellte und beschriebene Ausführungsbeispiel beschränkt. Dies gilt insbesondere für die Ausbildung der Spannvorrichtung. So kann beispielsweise die Spindel-Verstellung 35, 37 in Verbindung mit der Torsionsfeder 40 durch andere mechanische, pneumatische und/oder elektrische Stelleinrichtungen, beispielsweise durch Gasdruckfedern, ersetzt werden. Gleiches gilt auch für die auf die Antriebskette 52 einwirkende Vorrichtung 56, 58.

Der vorstehend beschriebene mechanische Schrank ist mit einer Programm-Steuerung ausgerüstet, die über ein Tastaturfeld die Auswahl bestimmter Tablare in einer frei wählbaren Reihenfolge ermöglicht, welche dann nacheinander auf dem jeweils kürzesten Weg in die Entnahme- bzw. Beladeposition verfahren werden. Zu diesem Zweck sind an jedem Tablar Betätigungsglieder, z. B. Nocken oder Stifte, befestigt, welche an vorgegebenen Stellen am Rahmen angeordnete Endschalter betätigen. Als zweckmäßig hat es sich erwiesen, zusätzliche Endschalter in Zwischenpositionen vorzusehen, um die jeweiligen Tablare auch in Zwischenebenen stillsetzen zu können. In diesem Falle können mehretagige Tablare verwendet werden, deren Innenraum beispielsweise durch horizontale Zwischenböden oder Schubladen aufgeteilt ist. Damit vergrößert sich die geordnete Unterbringungsmöglichkeit von verschiedenen Artikeln um ein Mehrfaches, ohne daß die Beschickung bzw. Entnahme komplizierter oder unbequemer würde. Wenn diese zusätzlichen Endschal-

0114671

ter lageverstellbar ausgebildet werden, dann ergibt sich die Möglichkeit einer genauen Anpassung an die individuellen Anforderungen des jeweiligen Benutzers.

Ein wesentliches Kriterium für den praktischen Gebrauch von mechanischen Schränken liegt in der sog. maximal zulässigen"Unlast". Diese "Unlast" ergibt sich zwangsläufig durch eine ungleichmäßige Beladung der einzelnen Tablare und wird extrem groß, wenn beispielsweise die in Fig. 1 dargestellten linken Tablare vollständig oder teilweise gefüllt sind und die - in Fig. 1 aus Gründen der zeichnerischen Klarheit nicht dargestellten - rechtsseitigen Tablare leer sind. In diesem Falle würde die gesamte Last allein am linken Trumm der beiden Endlosketten 1, 2 angreifen und es ergebe sich ein Kippmoment, welches die Standsicherheit eines bis zu 6 m oder mehr hohen Schrankes beeinträchtigt. Um derartige Kippgefahren zu vermeiden bzw. dem Benutzer anzuzeigen, daß die Unlast vorgegebene Grenzwerte überschritten hat und er aus diesem Grunde für eine gleichmäßigere Beladung Sorge tragen muß, ist bei dem erfindungsgemäß ausgebildeten mechanischen Schrank eine optische oder akustische Anzeigevorrichtung vorgesehen. Dabei wird von der Erkenntnis Gebrauch gemacht, daß sich die jeweils vorliegende Unlast direkt auf die Stromaufnahme des Antriebsmotors auswirkt. Demzufolge ist an den Stromkreis des Antriebsmotors 50 ein elektrischer Überwachungskreis mit einem Verzögerungsglied und einer optischen bzw. akustischen Anzeige angeschlossen, welcher die kurzzeitigen hohen Anfahr-Ströme ignoriert, aber bei einer durch übergroße Unlast hervorgerufenen anormalen Stromaufnahme anspricht. Zweckmäßig ist in diesen Überwachungskreis noch ein Schalter eingebaut, welcher bei Überschreiten der zulässigen Unlast um einen vorgegebenen Wert, z. B. um 10 oder 20 %, den Antriebsmotor abschaltet und damit den gesamten mechanischen Schrank stillsetzt.

## Ansprüche

1. Mechanischer Schrank mit einem paternosterartigen Umlaufförderer, bestehend aus zwei vertikal gespannten Endlosketten, einer Vielzahl von Tablaren zur Aufnahme von z. B. Industrie-Artikeln, die mit ihren Stirnwänden über Tragarmpaare in vorgegebenen gleichen Abständen an den beiden synchron angetriebenen Endlosketten angehängt sind, und aus ortsfesten Führungsschienen an den Schrankschmalseiten, die aus jeweils zwei vertikalen Abschnitten und je einem oberen und unteren Bogenabschnitt bestehen und in denen an den Stirnwänden der Tablare starr befestigte Führungsglieder geführt sind,

d a d u r c h   g e k e n n z e i c h n e t ,

daß an jedem Führungsglied (10) zwei Führungselemente (11, 12) mit vertikalem Zwischenabstand gelagert sind, wobei in den vertikalen Abschnitten (20) der Führungsschienen (18, 19) beide Führungselemente (11, 12) gemeinsam und in den Bogenabschnitten (21, 22) nur jeweils ein Führungselement (12) geführt sind.

2. Mechanischer Schrank nach Anspruch 1,
dadurch gekennzeichnet,
daß an der Innenseite der Führungsglieder (10) der Tragzapfen (9) des Tablars (17) und an ihrer Außenseite die beiden Führungselemente (11, 12) angeordnet sind, wobei die zueinander parallelen Mittelachsen des Tragzapfens

199-(x2257)-Sd-E

0114671

(9) und der oberen Führungselemente (11) bei allen Führungsgliedern (10) in der gleichen Ebene liegen.

3. Mechanischer Schrank nach Anspruch 1 oder 2,
dadurch gekennzeichnet,
daß die Führungsschienen (18, 19) in den vertikalen Abschnitten (20) doppelte und in den Bogenabschnitten (21,
22) einfache Tiefe haben, und daß die beiden Führungselemente (11, 12) durch unterschiedlich lange Lagerzapfen (13, 14) um mindestens die einfache Tiefe der
Bogenabschnitte (21, 22) seitlich gegeneinander versetzt an dem Führungsglied (10) gelagert sind.

4. Mechanischer Schrank nach einem der Ansprüche 1 bis 3,
dadurch gekennzeichnet,
daß das untere Führungselement (12) jedes Führungsgliedes (10) in den vertikalen und in den bogenförmigen Abschnitten (20, 21, 22) der Führungsschienen (18, 19) geführt ist.

5. Mechanischer Schrank nach einem der Ansprüche 1 bis 4,
dadurch gekennzeichnet,
daß die Führungsglieder (10) spiegelbildlich zueinander
versetzt an den beiden Stirnwänden der Tablare (17) befestigt sind, und daß die beiden Führungsschienen (18,
19) gegeneinander und zur Mittelebene (5) der beiden Endlosketten (1, 2) seitlich versetzt angeordnet sind.

6. Mechanischer Schrank nach einem der Ansprüche 1 bis 5,
dadurch gekennzeichnet,
daß sich die Tablare (17) auf ihrer vertikalen Bewegungsbahn aufeinander abstützen.

7. Mechanischer Schrank nach einem der Ansprüche 1 bis 6,
dadurch gekennzeichnet,
daß jeder Tragarm (7; 8) der Tragarmpaare aus jeweils
zwei gestanzten Flacheisen (7a, 7b; 8a, 8b) besteht.

8. Mechanischer Schrank nach einem der Ansprüche 1 bis 7,
dadurch gekennzeichnet,
daß der untere Tragarm (8a) eines Tragarmpaares (7a; 8a)
und der obere Tragarm (7b) des nächstfolgenden Tragarmpaares (7b; 8b) auf dem gleichen Kettenbolzen der Endloskette gelagert sind.

9. Mechanischer Schrank nach einem der Ansprüche 1 bis 8,
dadurch gekennzeichnet,
daß die Endlosketten (1, 2) einfache Laschenketten sind.

10. Mechanischer Schrank nach einem der Ansprüche 1 bis 9,
dadurch gekennzeichnet,
daß im Auflauf- und Ablaufbereich der Endlosketten (1,
2) auf und von den Kettenrädern (3, 4) ortsfeste Gleitführungen (25) vorgesehen sind, an denen die Kettenglieder zwangsgeführt sind.

11. Mechanischer Schrank nach einem der Ansprüche 1 bis 10,
dadurch gekennzeichnet,
daß eine selbsttätige Spannvorrichtung (30, 35, 40) für
jede Endloskette (1; 2) vorgesehen ist und daß zumindest einer der Bogenabschnitte (22) jeder Führungsschiene (18 bzw. 19) längsverschiebbar mit den beiden vertikalen Abschnitten (20) verbunden und entsprechend den
Spannbewegungen der Endloskette (1; 2) bewegbar ist.

12. Mechanischer Schrank nach Anspruch 11,
dadurch gekennzeichnet, daß die Spannvorrichtung gleichzeitig auf das Kettenrad (4) der Endloskette (1; 2) und auf den längsverschiebbaren Bogenabschnitt (22) in der jeweiligen Führungsschiene (18 bzw. 19) einwirkt.

13. Mechanischer Schrank nach Anspruch 11 oder 12,
dadurch gekennzeichnet,
daß die Spannvorrichtung eine ständig mit einer Torsionskraft beaufschlagte Spindel (35) aufweist, die mit einem Ende an einem vertikal geführten Einbaustück (30) angreift, welches über eine Schubstrebe (41) gelenkig mit dem längsverschiebbaren Bogenabschnitt (22) der Führungsschiene (18 bzw. 19) verbunden ist.

14. Mechanischer Schrank nach einem der Ansprüche 11 bis 13,
dadurch gekennzeichnet,
daß der Bogenabschnitt (22) der Führungsschienen (18 bzw. 19) über Gleitschuhe (44, 45) mit den vertikalen Abschnitten (20) der Führungsbahn (18, 19) verbunden ist, die eine durchgehende Führungsfläche gewährleisten.

15. Mechanischer Schrank nach einem der Ansprüche 11 bis 14,
dadurch gekennzeichnet,
daß zum Ausgleich der Spannbewegungen des Kettenrades (4) an der Antriebskette (52) eine Vorrichtung angreift, deren Spannrad (57) mit einer von den Spannbewegungen des Kettenrades (4) unabhängigen gleichbleibend großen Kraft gegen die Antriebskette (52) drückt und gegenüber entgegengesetzt gerichtete Auslenkbewegungen gesperrt ist.

16. Mechanischer Schrank nach einem der Ansprüche 1 bis
15, dadurch gekennzeichnet, daß in ihrer Lage am Schrankrahmen verstellbare Endschalter vorgesehen sind, die mit einer Programm-
Steuerung gekoppelt sind und das Anfahren ausgewählter Tablare sowie von Zwischentablaren in die Entnahmestellung gewährleisten.

17. Mechanischer Schrank nach einem der vorhergehenden
Ansprüche, dadurch gekennzeichnet, daß in den Stromkreis des elektrischen Antriebsmotors
(50) ein Überwachungskreis eingeschaltet ist, der über
die Lastaufnahme des Antriebsmotors (50) bei Überschreiten einer bestimmten Unlast eine Anzeige auslöst und
bei Erreichen eines Maximalwertes den Antriebsmotor
(50) abschaltet.

18. Mechanischer Schrank nach einem der vorhergehenden
Ansprüche, dadurch gekennzeichnet, daß an der Vorderseite jedes Tablars (80) Halter zur
lösbaren Befestigung einer Stirnwand (88) vorgesehen
sind und daß leistenförmige Fixierelemente (85, 86, 89)
zum wahlweisen Einbauen von Zwischenwänden (87) dienen.

19. Mechanischer Schrank nach einem der vorhergehenden
Ansprüche, dadurch gekennzeichnet, daß zur schraubenlosen Montage der Verkleidung ein durch Federspangen (73) gebildetes Einhängesystem für die einzelnen Verkleidungsbleche (74) vorgesehen ist.

0114671

FIG.1

011467í

FIG.2

FIG. 3

FIG. 4

011467

Einzelheit: E

FIG. 5

FIG. 6

0114671

FIG. 7

FIG.8

FIG.9

FIG. 10